# EUROPEAN PATENT APPLICATION

(11) **EP 2 555 297 A1**
(43) Date of publication of application: **06.02.2013**
(21) Application number: 12176045.8
(22) Date of filing: 12.07.2012
(51) Int. Cl.: H01M 8/02, C03C 8/24, H01M 8/24, C03C 8/20, C03C 8/18, C03C 8/02

(54) **Compliant glass seal for fuel cell stack**

(30) Priority: 03.08.2011 US 201113197130
(71) Applicant: Delphi Technologies, Inc., Troy, MI 48007 (US)
(72) Inventor: Chang, Fenglian, Grand Blanc, MI 48439 (US); Giacchina, John J., Davison, MI 48423 (US); Kerr, Rick Daniel, Fenton, MI 48430 (US)
(74) Representative: Allain, Michel Jean Camille

(57) **Abstract**

A solid oxide fuel cell stack having a plurality of cassettes and a compliant glass seal disposed between the sealing surfaces of adjacent cassettes, thereby joining the cassettes and providing a hermetic seal therebetween. The compliant glass seal may include a glass, at least one metal selected from Groups 9, 10, and 11 of the periodic table, and fibers of yttria-stabilized zirconia (YSZ) to enhance the desirable properties of the compliant glass seal. The combined weight percentage of the at least one metal and YSZ in the compliant glass seal is 30 to 42.5 weight percent, preferably 37.5 percent.

## Description

### TECHNICAL FIELD OF INVENTION

The present disclosure relates to a solid oxide fuel cell (SOFC) stack having a compliant glass seal; more specifically, to a compliant glass seal composition for a SOFC stack.

### BACKGROUND OF INVENTION

Fuel cells are used to produce electricity when supplied with fuels containing hydrogen and an oxidant such as air. A typical fuel cell includes an ion conductive electrolyte layer sandwiched between an anode layer and a cathode layer. There are several different types of fuel cells known in the art; amongst these are solid oxide fuel cells (SOFC). SOFC are regarded as highly efficient electrical power generator that produces high power density with fuel flexibility.

In a typical SOFC, air is passed over the surface of the cathode layer and a reformate fuel is passed over the surface of the anode layer opposite that of the cathode layer. Oxygen ions from the air migrate from the cathode layer through the dense electrolyte to the anode layer in which it reacts with the hydrogen and CO in the fuel, forming water and CO₂ and thereby creating an electrical potential between the anode layer and the cathode layer of about 1 volt.

Each individual SOFC is mounted within a metal frame, referred to in the art as a retainer, to form a cell-retainer frame assembly. The individual cell-retainer frame assembly is then joined to a metal separator plate, also known as an interconnector plate, to form a fuel cell cassette. Multiple cassettes are stacked in series with a seal disposed between the sealing surfaces of each cassette to form a SOFC stack.

Seals for SOFC stacks require special properties such as a coefficient of thermal expansion (CTE) comparable to those of the components of the SOFC stacks, a suitable viscosity to fill any gaps in the sealing surfaces of the cassettes, ability to maintain a hermetic seal at operating temperatures of about 500 °C - 1000°C, good chemical stability, and long term sustainability.

Typical glass seals formed from an alkaline earth aluminosilicate glass, such as a barium-calcium-aluminosilicate based glass, also known as G-18 glass, developed by Pacific Northwest National Laboratory (PNNL), are known to be utilized for SOFC stack sealing applications. G-18 glass provides a seal material that offers high electrical resistively, high coefficient of thermal expansion, high glass transition temperature, and good chemical stability. However, G-18 glass crystallizes at prolonged elevated operating temperatures becoming hard and brittle over time, thereby losing its ability to fill in gaps in the sealing surfaces and its ability to provide a hermetic seal. Another drawback for glass seals is that the sealing surfaces of the SOFC stack need to be preoxidized before the application of the glass seal to ensure a hermetic seal at operating temperatures.

Another known type of seals for SOFC stack sealing applications are composite glass seals, which are formed from glass materials mixed with fibers. A drawback for composite glass seals is that the CTE of the composite glass seal materials have to be specifically matched with that of the CTE of the mating parts. Furthermore, over time at sustained operating conditions and repeated thermal cycling of the SOFC stack, composite glass seals tend to degrade and become prone to seal leaks due to the formation of microscopic cracks.

Compliant metallic seals formed of deformable metallic materials are also known to be used for SOFC stack. Compliant metallic seals are desirable due to its resistant to oxidation and its CTE is comparable to the CTE of the mating materials of the SOFC stack. The metallic materials used for the compliant metallic seals include noble metals, which are expensive and are subject to degradation at SOFC operating environments. Another drawback of utilizing noble metals as a compliant seal is that at operating temperatures of the SOFC, the metals tend to migrate toward and poison the SOFC.

Based on the foregoing, there is a long felt need for an improved compliant seal that is chemically and mechanically stable under long-term operating and thermal cycling conditions, does not contaminate or otherwise adversely affect fuel cell performance, and yet economical to produce.

### SUMMARY OF THE INVENTION

The present invention relates to a SOFC stack having an improved compliant glass seal disposed between the sealing surfaces of adjacent cassettes and between the sealing surfaces of the fuel cell and retainer frame. The compliant glass seal includes a glass, a ceramic fiber, and at least one metal selected from Groups 9, 10, and 11 of the periodic table. The glass includes an alkaline earth aluminosilicate (AEAS), the ceramic fiber includes YSZ, and the metal includes a metal selected from a group consisting of Ag, Ni, Pd, Pt, and Rh.

The compliant glass seal includes a combined weight percentage of Ag and YSZ fibers of 30 to 42.5 weight percent, preferably 37.5 weight percent. It is further preferred that Ag is 15 weight percent and YSZ is 22.5 weight percent of the compliant glass seal.

The compliant glass seal provides the benefits of maintaining a robust hermetic seal over prolonged elevated temperature and repeated thermal cycling of a SOFC stack. The improve seal long term stability is due to improved seal morphology, thereby promoting bonding between glass and steel alloy substrate. The CTE of the improved compliant glass seal composition matches the base substrate materials more closely due to the addition of the at least one metal selected from Groups 9, 10, and 11 of the periodic table, preferably Ag.

The improved compliant glass seal provides at least the advantages of maintaining a compliant, superior bonding of non-preoxidized aluminized sealing surfaces, and reduced complexity in manufacturing of the SOFC stack. Further features and advantages of the invention will appear more clearly on a reading of the following detailed description of an embodiment of the invention, which is given by way of non-limiting example only and with reference to the accompanying drawings.

### BRIEF DESCRIPTION OF DRAWINGS

This invention will be further described with reference to the accompanying drawings in which:

Fig. 1 is an exploded isometric drawing of a portion of a SOFC stack employing a plurality of single-cell cassettes.

Fig. 2 is a graph summarizing the results from an Instron test conducted on a prior art glass seal sandwiched between two preoxidized crofers, a compliant glass seal of the present invention sandwiched between two pre-oxidized crofers, and the compliant glass seal of the present invention sandwiched between two non-preoxidized crofers.

Fig. 3 is a photograph of the interface morphology of a prior art glass seal bonded to a preoxidized aluminized Crofer.

Fig. 4 is a photograph of the interface morphology of the compliant glass seal of the present invention bonded to an aluminized and then preoxidized Crofer.

Fig. 5 is a photograph of the interface morphology of the compliant glass seal of the present invention bonded to an aluminized and non-preoxidized Crofer.

### DESCRIPTION OF THE PREFERRED EMBODIMENTS

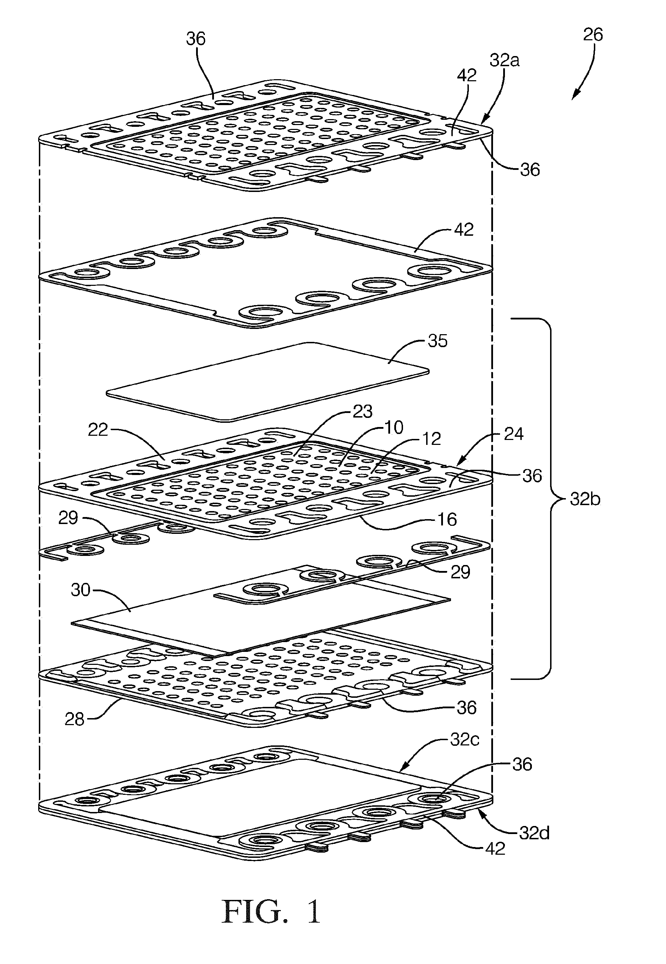

In accordance with a preferred embodiment of this invention, referring to Fig. 1 is a solid oxide fuel cell stack 26 having a compliant glass seal 42 between the sealing surfaces of the cassettes 32a, 32b, 32c, 32d. The compliant glass seal 42 may include an alkaline earth aluminosilicate (AEAS) glass, at least one metal selected from Groups 9, 10, and 11 of the Periodic Table such as Silver (Ag), Nickel (Ni), Palladium (Pd), Platinum (Pt), and Rhodium (Rh), and a fiber having zirconium oxide, aluminum oxide, and/or yttria-stabilized zirconia (YSZ) to enhance the desirable properties of the compliant glass seal 42. An example of an AEAS based glass is a barium-calcium-aluminosilicate (BCAS) glass, such as G-18 glass. The AEAS glass provides the strength to maintain the structural integrity of the compliant glass seal 42 between the cassettes 32a, 32b, 32c, 32d while the selected at least one metal cooperates with the plurality of YSZ fibers ensuring the longevity of the compliant glass seal 42 over prolonged exposure at elevated operating temperatures and repeated thermal cycles. The details and advantages the compliant glass seal 42 will be disclosed below.

Shown in Fig. 1 an exploded isometric drawing of a portion of a SOFC stack 26 employing a plurality of single-cell cassettes 32a, 32b, 32c, 32d. The first and second cassettes 32a, 32b and the compliant glass seal 42 therebetween are shown spaced apart from each other. The third and fourth cassettes 32c, 32d are shown jointly sealed to each other with the compliant glass seal 42 therebetween.

For illustrative purposes, the second cassette 32b is shown in an exploded view to detail the components that form each of the cassettes 32a, 32b, 32c, 32d. The second cassette 32b includes a fuel cell 10 mounted within a retainer frame 22. The fuel cell 10 is comprised of an electrolyte layer (not shown) sandwiched between a cathode layer 12 and an anode layer 16. The retainer frame 22 defines a central opening or picture frame window 23. The fuel cell 10 is positioned in the picture frame window 23 and joined to the retainer frame 22 to form a cell-retainer frame assembly 24. The compliant glass seal 42 may be used as a bonding material to bond the fuel cell 10 to the retainer frame 22, thereby fixing the fuel cell 10 within the picture frame window 23.

An intermediate process joins together the cell-retainer frame assembly 24, anode spacers 29, an anode interconnect 30, a cathode interconnect 35, and a separator plate 28 to form the complete second cassette 32b. The first, third, and forth fuel cell cassettes 32a, 32c, 32d are formed with similar components as that of the second cassette 32b. Each of the cassettes 32a, 32b, 32c, 32d includes sealing surfaces 36, in which the sealing surfaces 36 of each cassette are complementary to the corresponding sealing surfaces 36 of the adjacent cassette to which it is joined. The sealing surfaces 36 may include the surfaces of the cell-retainer assembly 24 where the fuel cell 10 is bonded to the retainer frame 22. The cassettes 32a, 32b, 32c, 32d are then assembled in series to form a SOFC stack 26.

During the assembly of the cassettes 32a, 32b, 32c, 32d into a SOFC Stack 26, the compliant glass seal 42 composite, in the form of a paste or tape, is disposed between the sealing surfaces 36 of the adjacent cassettes 32a, 32b, 32c, 32d. In the prior art, it is known to aluminize and then preoxide the aluminized sealing surfaces 36 before the application of the seal material, thereby ensuring a hermetic seal at operating temperatures. The process of aluminizing and then preoxidizing the aluminized sealing surfaces is labor and energy intensive. The process includes applying a layer of aluminum on the sealing surfaces and then heat treating to diffuse the aluminum into the steel substrate. The aluminized steel substrate is then preoxidized to form a layer of aluminum oxide.

It was unexpectedly found that at certain combined weight percentages of metals selected from Groups 9, 10, and 11 of the Periodic Table, such as Ag, Ni, Pd, Pt, and Rh, and YSZ fibers in an AEAS glass offer improved desirable seal qualities. It was further unexpectedly found that at certain combinations of weight percentages of metallic Ag and YSZ fibers in the AEAS glass offer improved joining and bonding of the sealing surfaces of the SOFC stack 26. It was still further unexpectedly found that these certain combinations of weight percentages of metallic Ag and YSZ fibers in the AEAS glass provide a compliant glass seal 42 that offers superior bonding of non-preoxidized aluminized sealing surfaces over preoxidized aluminized sealing surfaces. This latter finding is contrary to the teachings of the prior art and offers the advantages of eliminating the labor intensive and costly step of preoxidizing the aluminized sealing surfaces 36.

The improved compliant glass seal 42 composition includes an organic binder, an alkaline earth aluminosilicate (AEAS) based glass, at least one metal selected from a group consisting of Ag, Ni, Pd, Pt, and Rh, and a plurality of yttria-stabilized zirconia (YSZ) fibers for strength. The compliant glass seal 42 composition is applied to the sealing surfaces 36 of the SOFC stack 26 as disclosed above and heat treated to form the compliant glass seal 42 joining and bonding the sealing surfaces 36 to provide a hermetic seal containing the reactant gases and electrically isolate the adjacent separator plates 28. During the heat treating process, the organic binder is flashed off leaving a solid portion comprising of at least one metal, YSZ fibers, and AEAS glass.

Shown in Table 1 below are compliant glass seal 42 compositions having the preferred weight percentages of metallic Ag, YSZ fibers, and AEAS glass that offer the unexpected results mentioned above. Also shown are preferred combined weight percentages of metallic Ag and YSZ fiber in the AEAS glass.

| **Table 1** | | | | | |
|---|---|---|---|---|---|
| **Test No.** | **Silver (wt)** | **YSZ fiber (wt)** | **Glass (wt)** | **total(wt%)** | **(wt%)** |
| S1 | 10.00% | 20.00% | 70.000% | 100.000% | 30 |
| S2 | 15.00% | 15.00% | 70.000% | 100.000% | 30 |
| S6 | 10.000% | 30.000% | 60.000% | 100.000% | 40 |
| S11 | 10.00% | 25.000% | 65.00% | 100.000% | 35 |
| S12 | 15.00% | 22.50% | 62.50% | 100.000% | 37.5 |
| S13 | 20.00% | 20.00% | 60.00% | 100.000% | 40 |
| S14 | 25.00% | 17.50% | 57.50% | 100.000% | 42.5 |
| S16 | 22.50% | 15.00% | 62.50% | 100.000% | 37.5 |
| S24 | 17.50% | 20.00% | 62.50% | 100.000% | 37.5 |
| S25 | 20.00% | 17.50% | 62.50% | 100.000% | 37.5 |

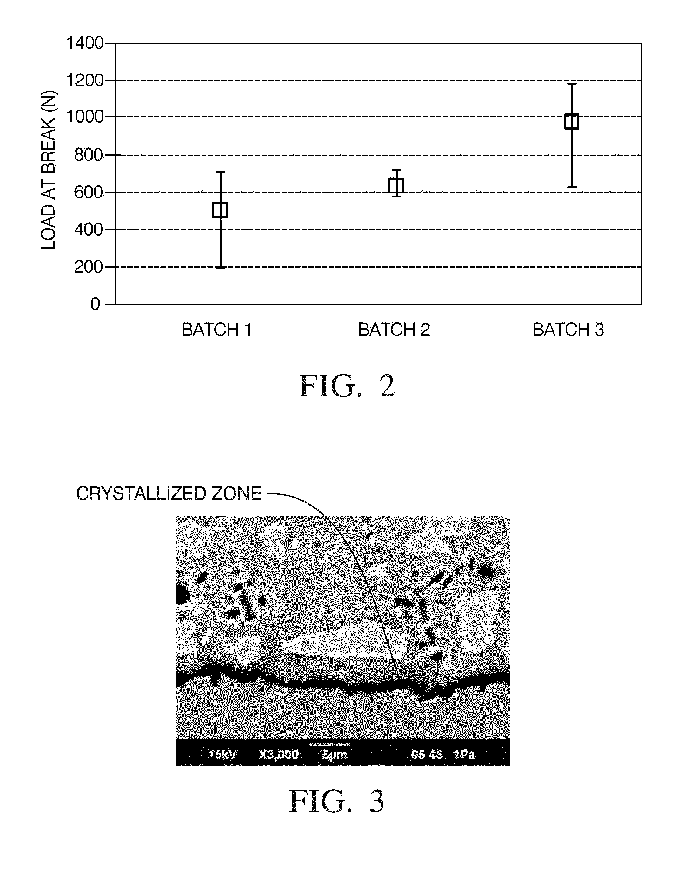

Shown in Fig. 2 is a graph displaying the results of an Instron pull test conducted on three (3) batches of Crofer discs. Each Crofer disc includes a steel substrate coated with a layer of aluminum. The aluminum layers of the first and second batches were preoxidized while the aluminum layer of the third batch remained non-preoxidized. The thickness of each Crofer was approximately 250 µm A 2 µm aluminum layer was deposited onto steel surface by physical vapor disposition followed by heat treating in a reduced environment at a time and temperature sufficient to diffuse a portion of the aluminum layer into the steel substrate. The first and second batch was further heat treated in air at a time and temperature sufficient to preoxidize the surface aluminum layer.

Each test sample of the first batch included a glass seal tape sandwiched between two pre-oxidized Crofer discs. The test samples of the first batch were heated treated to cure the glass seal. Each test samples of the second batch included a compliance glass seal tape having an organic binder, metallic Ag, YSZ fibers, and AEAS glass sandwiched between two pre-oxidized Crofer discs. The test samples of the second batch were heated treated to flash off the binder and cure the compliance seal leaving 9.90% (wt) Metallic Ag, 14.85% (wt) YSZ fiber, and 41.25% (wt) AEAS glass. Each test samples of the third batch also included a compliance seal having a binder, metallic silver, YSZ fibers, and AEAS glass sandwiched between two non-preoxidized Crofer discs. The test samples of the third batch were heated treated to flash off the binder and cure the compliance seal, also leaving 9.90% (wt) Metallic Ag, 14.85% (wt) YSZ fiber, and 41.25% (wt) AEAS glass.

Each batch contained approximately 10 test samples each. Each test sample includes two 0.5" x 2.5" Crofer strips with a seal therebetween, lap joint together. The overlap bonding area is 0.5" x 0.5". The pull test was performed on an Instron model 5566 at a pull speed of 5mm/min.

With reference to Fig. 2, the load break (failure of the seal joint) of the first batch, second batch, and third batch were approximately 500 N, 650N, and1000 N, respectively. As expected, the prior art AEAS glass seal sandwiched between two pre-oxides Crofers separated under a load that is lower than that of the improved compliant glass seal 42 sandwiched between two preoxidized Crofers. However, unexpectedly, the compliant glass 42 seal sandwiched between two preoxidized Crofers separated under a load that is lower than that of the compliant glass seal 42 sandwiched between two non-preoxidized Crofers. In other words, the compliant glass seal 42 sandwiched between two non-preoxidized crofers offers greater joining and sealing than that of a compliant glass seal 42 sandwiched between two traditionally preoxidized crofers.

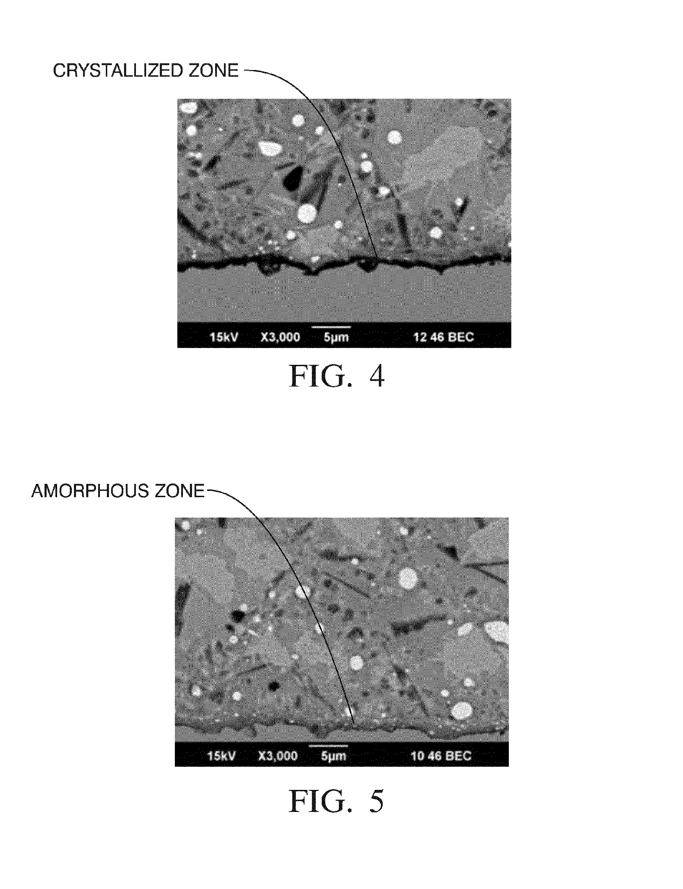

Shown in Fig. 3 is a photograph of the interface morphology of a prior art AEAS glass bonded to an aluminized and preoxidized Crofer. Shown in Fig. 4 is a photograph of the interface morphology of the compliant glass seal 42 bonded to an aluminized and preoxidized Crofer. Common to both Figs. 3 and 4 is a crystallized zone at the interface of the seal material and preoxidized Crofer. Shown in Fig. 5 is a photograph of the interface morphology of the compliant glass seal of the present invention bonded to an aluminized and non-preoxidized Crofer.

With reference to Fig. 5, unlike that which is shown in Figs. 3 and 4, an amorphous zone exists between the interface of the seal material and Crofer. It is believed that the non-preoxidized Crofer allows the amorphous zone to be present, which provides the unexpected improved performance of the compliance glass seal. It is suspected that the chemical bond between Ag and the aluminized surface reduces the aluminum reactivity with the AEAS glass; therefore, an amorphous zone was retained. The CTE of the compliant amorphous zone matches more closely to the CTE of the aluminized crofer resulting in less localized stress at the interface and therefore, a more robust seal.

The compliant glass seal 42 provides the advantages of maintaining a compliant robust hermetic seal over prolonged elevated temperature and repeated thermal cycling of a SOFC stack 26. The compliant glass seal 42 further provides the advantage of superior bonding of non-preoxidized aluminized sealing surfaces over preoxidized aluminized sealing surfaces; therefore allowing the elimination of the process of preoxidizing the aluminized sealing surfaces in the manufacturing of SOFC stacks.

While this invention has been described in terms of the preferred embodiments thereof, it is not intended to be so limited, but rather only to the extent set forth in the claims that follow.

## Claims

1. A compliant glass seal (42) for a solid oxide fuel cell stack (26) wherein said compliant glass seal (42) comprises at least one metal selected from a group consisting of metals in Groups 9, 10, and 11 of the Periodic Table, and a plurality of fibers disposed within an alkaline earth aluminosilicate (AEAS) glass.

2. A compliant glass seal (42) as set in the preceding claim, wherein said AEAS glass is barium-calcium-aluminosilicate based glass.

3. A compliant glass seal (42) as set in any of the preceding claims wherein said plurality of fibers includes a material selected from a group consisting of zirconium oxide, aluminum oxide, and yttria-stabilized zirconia (YSZ).

4. A compliant glass seal (42) as set in claim 3, wherein said plurality of fibers includes YSZ.

5. A compliant glass seal (42) as set in claim 4, wherein said at least one metal is selected from a group consisting of Ag, Ni, Pd, Pt, and Rh.

6. A compliant glass seal (42) as set in claim 5, wherein at said least one metal is Ag.

7. A compliant glass seal (42) as set in claim 6 includes a combined weight percentage of said Ag and said YSZ is 30 to 42.5 percent.

8. A compliant glass seal (42) as set in claim 7, wherein said combined weight percentage of said Ag and said YSZ is 35 to 40 percent.

9. A compliant glass seal (42) as set in claim 8, wherein said combined weight percentage of said Ag and said YSZ is 37.5 percent.

10. A compliant glass seal (42) as set in claim 9, wherein said weight percentage of Ag is between 10 to 25 percent.

11. A compliant glass seal (42) as set in claim 10, wherein said weight percentage of Ag is 15 percent and said weight percentage of YSZ is 22.5 percent.

12. A compliant glass seal (42) as set in any of the preceding claims comprising an organic binder.

13. A solid oxide fuel cell stack (26) comprising:
a first cassette having a first sealing surface and a second cassette having a second sealing surface (32a, 32b, 32c, 32d) complementary to said first sealing surface, the second cassette being disposed proximate to said first cassette such that said second sealing surface is oriented toward said first sealing surface; and
a compliant glass seal (42) disposed between said first and second sealing surfaces, thereby joining said first cassette to said second cassette, wherein the compliant glass seal (42) is as set in any of the preceding claim.

14. A solid oxide fuel cell stack (26) as set in claim 13, wherein at least one of said first and second sealing surfaces is a non-preoxidized aluminized steel substrate.
